# EUROPEAN PATENT APPLICATION

(11) **EP 3 490 261 A1**
(43) Date of publication of application: **29.05.2019**
(21) Application number: 17204029.7
(22) Date of filing: 28.11.2017
(51) Int. Cl.: H04N 21/433, H04N 21/643, H04N 21/61

(54) **HOST-BASED RESUME FEATURE FOR VOD SERVICES**

(71) Applicant: Vestel Elektronik Sanayi ve Ticaret A.S., 45030 Manisa (TR)
(72) Inventor: DIKICI, Alihan, 45030 Manisa (TR)
(74) Representative: Ascherl, Andreas

(57) **Abstract**

The present application refers to a method for allowing a user 2 to resume watching content with a highest quality at an occurrence of any interruption or a pause. The method preferably comprising the steps of, storing a content ID 6entity ID in a matrix database 12 at a hosting end for the content that is interrupted in between. When a request 5 from the user 2 to broadcast the content related to a selected content ID 6 is received, the selected content ID 6 is searched with the stored content ID 6's in the matrix database 12. A corresponding quadruple item 11 is selected from the matrix database 12 and matched against with a manifest file provided with a plurality of chunk index. The chunk index (7,8,9,10) for the extracted quadruple item 11 is obtained and transferred to the server 3 for broadcasting the selected content from the point of interruption at the hosting end from the server 3. The host based resume feature for VOD services provide the selected content with a same resolution.

## Description

This invention refers to a method for allowing a user to resume watching a content with a highest quality at an occurrence of any interruption or a pause according to claim 1.

### Background of the Invention

Smart TVs offer many services to end-users and the most known or commonly used one is Video-on-Demand (VOD) service. Briefly, user can select and watch video content such as movies/TV shows whenever they want, rather than having to watch at a specific broadcast time.

Although some VOD apps have resume functionality, and others might not provide such feature. At this point, it becomes a problem for a user to find last watched position with the last quality of service for the content if user has not watch it till the end.

Prior art D1 KR20150134007A discloses a method for providing a video on demand (VOD) service. According to an embodiment of the present invention, the method for providing the VOD service in a broadcasting center server which is linked to a content providing server and a content distribution network server, comprises the following steps: receiving a chunk file of a real-time broadcasting program from the content providing server; performing a preprocessing procedure with respect to the received chunk file; storing the preprocessed chunk file; and transmitting a predetermined distribution start command to the content distribution network server. Accordingly, the prior art document can effectively provide a real-time VOD service with respect to the real-time broadcasting program.

Another prior art D2 US7127735B1 provides a video-on-demand (VOD) system and method which efficiently enables a user to resume viewing of a video program from an interrupted position is disclosed. The prior art allows the user to resume viewing of a video program even if the user requests a resumption of the interrupted video program several times or through different video servers. Particularly, the video viewing characteristic information of a user terminal is not managed by a video server of the VOD system, but is managed by the user terminal. Accordingly, when a user interrupts viewing of a video program, the video server transmits to the user terminal user profile information which includes the characteristic information related to the viewing of the video program. Thereafter, if the user requests resumption of the interrupted video program using the user profile information, the video server retransmits the video program from the interrupted position of the video program.

The subject-matter of the prior arts does not provide chunk index modiifcation in the hosting end itself and requires server end modification. Further, the prior art has another drawback that the resumed video on demand may not be broadcasted with the same resolution / video quality setting by the user at the time of interruption or pause.

### Object of the Invention

It is therefore the object of the present invention to provide method for allowing a user to resume watching content with a highest quality at an occurrence of any interruption or a pause without any server end modifiction compared to the known methods.

### Description of the Invention

The before mentioned object is solved by a method for allowing a user to resume watching a content with a highest quality at an occurrence of any interruption or a pause according to claim 1. The method according to the present invention preferably comprising the steps of, storing a content identity (ID) in a matrix database at a hosting end for the content that is interrupted in between, receiving a request from the user to broadcast the content related to a selected content ID, checking the selected content ID with the stored content ID's in the matrix database, extracting a quadruple item of the selected content ID from the matrix database, matching the extracted quadruple item with a manifest file provided with a plurality of chunk index at the hosting end, obtaining the chunk index for the extracted quadruple item from the hosting end, requesting the content from a server based on an obtained chunk index corresponding to the extracted quadruple item from the hosting end, and broadcasting the selected content requested by the user from the point of interruption at the hosting end from the server. The hosting end is a user device or user terminal.

This solution is beneficial since such a method for allowing a user to resume watching content with a highest quality at an occurrence of any interruption or a pause without any server end modification and also provide the selected content with a same resolution at the time of interruption or pause.

Further preferred embodiments are subject-matter of dependent claims and/or of the following specification parts.

According to a preferred embodiment of the present invention the method further comprising the steps of, broadcasting the selected content requested by the user from beginning if the content ID is absent in the matrix database at the hosting end. Further, the chunk index is re-indexed at the hosting end for broadcasting the selected content from the server, if the user requested for the selected content from the beginning. A latest chunk index for an audio, a video, a subtitle and a latest quality level is also stored at the hosting end thereby to provide adaptive streaming for each content that are interrupted in between. The selected content requested by the user is broadcasted from the point of interruption at the hosting end from the server with a specific quality stored in the chunk index at an instance of interruption. The content includes a multimedia streaming.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates an exemplary model of a basic structure of a method allowing a user to resume watching content with a highest quality at an occurrence of any interruption or a pause at hosting end, according to the present invention; and
- Fig. 2: illustrates the steps involved in the method for allowing a user to resume watching content with a highest quality at an occurrence of any interruption or a pause, according to the present invention.

### Detailed Description of the Drawings

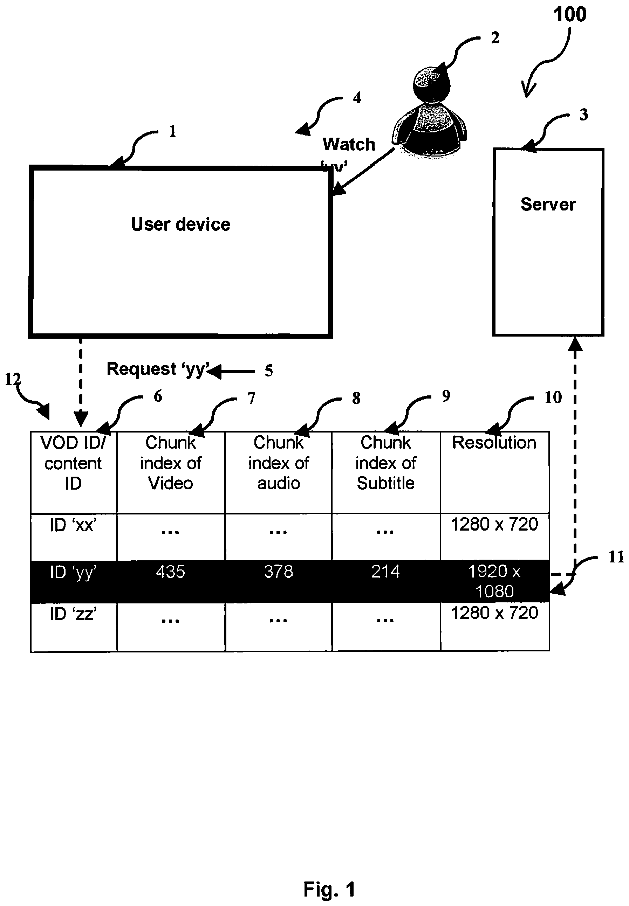

Fig. 1 illustrates an exemplary model 100 of a basic structure of a method allowing a user 2 to resume watching content with a highest quality at an occurrence of any interruption or a pause at hosting end, according to the present invention. For allowing the user 2 to resume watching content with a highest quality at an occurrence of any interruption or a pause, a matrix database 12 created at the hosting end. The matrix database 12 is configured to store latest chunk index for audio 8/video 7/subtitle 9 and latest quality level (resolution 10) along with the content ID 6 for each of the content that are interpreted or paused. This chunk index (7,8,9,10) aids a processor at the host end to select content or a video on demand (VOD) that are interrupted or paused. The chunk index (7,8,9,10) of the selected content is transferred to a server 3 to broadcast the selected content. The chunk index (7,8,9,10) is also utilized for adaptive streaming of the content that is interrupted. Then, if user 2 select resume option, content is requested from specific chunk with the specific quality from the server 3.

For example, if the user 2 wanted to watch a selected content 'yy' 4, then the request 5 for the selected content 'yy' 4 is sent to the processor of the hosting end that includes the matrix database 12. The corresponding content ID 6 of the selected content 'yy' 4 is matched with the stored content ID's 6 provided in the matrix database 12. A quadruple item 11 of the selected content ID 6 is extracted out from the matrix database 12. Further, the extracted quadruple item 11 is matched with a manifest file provided with a plurality of chunk index (7,8,9,10) at the hosting end. The plurality of chunk index (7,8,9,10) includes chunk index audio 8, chunk index video 7, chunk index subtitle 9, chunk index resolution 10. The chunk index (7,8,9,10) for the extracted quadruple item 11 is obtained from the hosting end. The selected content 'yy' 4 is requested 5 from the server 3 based on an obtained chunk index corresponding to the extracted quadruple item 11 from the hosting end. The selected content requested 5 by the user 2 is broadcasted from the point of interruption at the hosting end from the server 3.

This method is beneficial hence the method does not require any changes on the server 3 end. In other words, all operations are handled by the host end.

This solution is beneficial since such a method for allowing a user 2 to resume watching content with a highest quality at an occurrence of any interruption or a pause without any server 3 end modification and also provide the selected content with a same resolution at the time of interruption or pause.

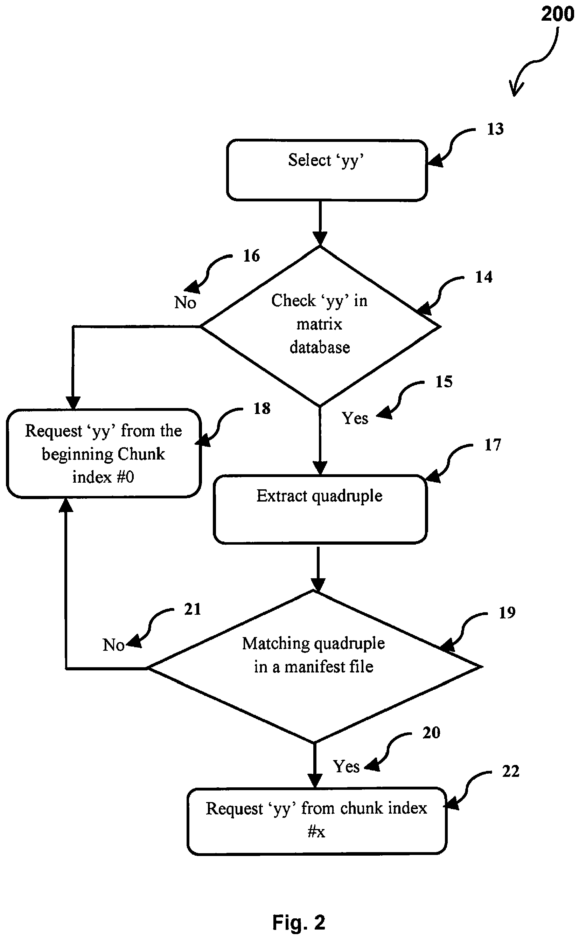

Fig. 2 illustrates the steps involved in the method for allowing a user 2 to resume watching content with a highest quality at an occurrence of any interruption or a pause, according to an embodiment. The method for allowing a user 2 to resume watching a content with a highest quality at an occurrence of any interruption or a pause preferably comprising the steps of, storing a content ID 6 in a matrix database 12 at a hosting end for the content that is interrupted in between, receiving a request 5 from the user 2 to broadcast the content related to a selected content ID 6, checking the selected content ID 6 with the stored content ID 6's in the matrix database 12, extracting a quadruple item 11 of the selected content ID 6 from the matrix database 12, matching the extracted quadruple item 11 with a manifest file provided with a plurality of chunk index (7,8,9,10)at the hosting end, obtaining the chunk index (7,8,9,10)for the extracted quadruple item 11 from the hosting end, requesting 5 the content from a server 3 based on an obtained chunk index (7,8,9,10) corresponding to the extracted quadruple item 11 from the hosting end, and broadcasting the selected content requested 5 by the user 2 from the point of interruption at the hosting end from the server 3. The hosting end is a user device 1 or terminal.

According to an embodiment, the method further comprising the step of, broadcasting the selected content requested 5 by the user 2 from beginning if the content ID 6 is absent in the matrix database 12 at the hosting end. Further, the chunk index (7,8,9,10) is re-indexed at the hosting end for broadcasting the selected content from the server 3, if the user 2 requested 5 for the selected content from the beginning. A latest chunk index (7,8,9,10) for an audio, a video, a subtitle and a latest quality level is also stored at the hosting end thereby to provide adaptive streaming for each content that are interrupted in between. The selected content requested 5 by the user 2 is broadcasted from the point of interruption at the hosting end from the server 3 with a specific quality stored in the chunk index (7,8,9,10) at an instance of interruption. The content includes a multimedia streaming.

According to an exemplary embodiment, more specifically, the method for allowing a user 2 to resume watching content with a highest quality at an occurrence of any interruption or a pause comprising the steps of,
At block 13, the user 2 is allowed to select 'yy' 4 or any content in the user device 1,
At block 14, the selected content 'yy' 4 is checked in the matrix database 12,
At block 15, if the selected content is found in the matrix database 12, then the process follows the step at block 17,
At block 16, if the selected content is not found in the matrix database 12, then the process follows the step at block 18,
At block 17, a quadruple item 11 of the selected content ID 6 from the matrix database 12 is extracted,
At block18, a request 5 is sent to the server 3 to broadcast the selected content 'yy' 4 from the beginning hence the chunk index (#0) is not avilable in the matrix database 12,
At block 19, the extracted quadruple item 11 is matched with a manifest file provided with a plurality of chunk index at the hosting end,
At block 20, if the extracted quadruple item 11 is matched with the manifest file, then the process follows the step at block 22,
At block 21, if the extracted quadruple item 11 is matched with the manifest file, then the process follows the step at block 18, and
At block 22, a request 5 is sent to the server 3 to broadcast the selected content 'yy' 4 from the interrrupted portion hence the chunk index (#x) is avilable in the matrix database 12.

Thus, a method for allowing a user 2 to resume watching content with a highest quality at an occurrence of any interruption or a pause is achieved at the host end itself. The method according to the present invention preferably comprising the steps of, storing a content ID 6entity ID in a matrix database 12 at a hosting end for the content that is interrupted in between. When a request 5 from the user 2 to broadcast the content related to a selected content ID 6 is received, the selected content ID 6 is searched with the stored content ID 6's in the matrix database 12. A corresponding quadruple item 11 is selected from the matrix database 12 and matched against with a manifest file provided with a plurality of chunk index. The chunk index (7,8,9,10) for the extracted quadruple item 11 is obtained and transferred to the server 3 for broadcasting the selected content from the point of interruption at the hosting end from the server 3. The host based resume feature for VOD services provide the selected content with a same resolution.

### List of reference numbers

- 1: user device
- 2: user
- 3: server
- 4: watch 'yy'
- 5: request 'yy'
- 6: content ID
- 7: chunk index of video
- 8: chunk index of audio
- 9: chunk index of subtitle
- 10: chunk index of resolution
- 11: quadruple item of selected content
- 12: matrix database
- 13: Select 'yy'
- 14: Check 'yy' in matrix database
- 15: yes
- 16: no
- 17: Extract quadruple
- 18: Request 'yy' from the beginning Chunk index #0
- 19: Matching quadruple in a manifest file
- 20: yes
- 21: no
- 22: Request 'yy' from chunk index # x

## Claims

1. A method for allowing a user 2 to resume watching content with a highest quality at an occurrence of any interruption or a pause, the method comprising the step of,
storing a content ID (identity) 6 in a matrix database 12 at a hosting end for the content that is interrupted in between; wherein the hosting end is a user device 1 or terminal;
receiving a request 5 from the user 2 to broadcast the content related to a selected content ID 6;
checking the selected content ID 6 with the stored content ID 6's in the matrix database 12;
extracting a quadruple item 11 of the selected content ID 6 from the matrix database 12;
matching the extracted quadruple item 11 with a manifest file provided with a plurality of chunk index (7,8,9,10)at the hosting end;
obtaining the chunk index (7,8,9,10) for the extracted quadruple item 11 from the hosting end;
requesting the content from a server 3 based on an obtained chunk index (7,8,9,10)corresponding to the extracted quadruple item 11 from the hosting end; and
broadcasting the selected content requested 5 by the user 2 from the point of interruption at the hosting end from the server 3.

2. The method as claimed in claim 1, wherein the method further comprising the step of,
broadcasting the selected content requested 5 by the user 2 from beginning if the selected content ID 6 is absent in the matrix database 12 at the hosting end.

3. The method as claimed in claim 1, wherein the method further comprising the steps of,
re-indexing the chunk index (7,8,9,10) at the hosting end for broadcasting the selected content from the server 3, if the user 2 requested 5 for a content from the beginning.

4. The method as claimed in claim 1, wherein the method further comprising the steps of,
storing a latest chunk index (7,8,9,10) for an audio, a video, a subtitle and a latest quality level thereby to provide adaptive streaming for each content that are interrupted in between.

5. The method as claimed in claim 1, wherein the method further comprising the steps of,
broadcasting the selected content requested 5 by the user 2 from the point of interruption at the hosting end from the server 3 with a specific quality stored in the chunk index (7,8,9,10) at an instance of interruption.

6. The method as claimed in claim 1, wherein the content includes a multimedia streaming.
